# EUROPEAN PATENT APPLICATION

(11) **EP 3 579 024 A1**
(43) Date of publication of application: **11.12.2019**
(21) Application number: 19178560.9
(22) Date of filing: 05.06.2019
(51) Int. Cl.: G01S 17/95, G01S 17/42, G01S 17/58

(54) **LIDAR AIR DATA SYSTEM WITH MULTIPLY INTERROGATED TRANSMITTERS**

(30) Priority: 08.06.2018 US 201862682487 P; 26.11.2018 US 201816199562
(71) Applicant: Honeywell International Inc., Morris Plains, NJ New Jersey 07950 (US)
(72) Inventor: WIEBOLD, Matthew, Morris Plains, NJ 07950 (US); LODDEN, Grant Hamilton, Morris Plains, NJ 07950 (US)
(74) Representative: Houghton, Mark Phillip

(57) **Abstract**

An air data system comprises a light detection and ranging (LiDAR) unit, comprising an optical transceiver that includes at least one light transmitter and at least two light receivers. A processing unit is in operative communication with the LiDAR unit. The LiDAR unit is configured to transmit at least one light beam into an external interaction air region along a first line of sight, and collect scattered portions of the at least one light beam from the external interaction air region in the at least two light receivers. The at least two light receivers are configured to sample the scattered portions of the at least one light beam from a common volume of air in the external interaction air region. The processing unit is operative to receive collected light data from the LiDAR unit and process the light data to produce air data parameters.

## Description

### BACKGROUND

Light Detection and Ranging (LiDAR) based air data is a promising technology that could ultimately augment or replace legacy air data systems on aircraft. Current state of the art LiDAR air data systems are typically comprised of an optical transceiver and a processing line replaceable unit (LRU). The optical transceiver contains several optical assemblies designed to transmit and receive light at different angles or directions. A single transmit and receive pair is configured to form an optical line of sight (LOS) or an interaction region, where the measurement is performed remotely or away from the aircraft body. While the configuration of the LOS and remote measurement are advantageous for collecting air data parameters outside the boundary layer of the aircraft, this results in critical air data parameters being measured at unique volumes of air and averaged to produce the data output. This conventional approach assumes that the air is homogenous between the different interaction regions of the different LOS. Such an assumption may be invalid under certain flight conditions to which aircraft are exposed.

### SUMMARY

An air data system comprises a light detection and ranging (LiDAR) unit, comprising an optical transceiver that includes at least one light transmitter and at least two light receivers. A processing unit is in operative communication with the LiDAR unit. The LiDAR unit is configured to transmit at least one light beam into at least one external interaction air region along a first line of sight, and collect scattered portions of the at least one light beam from the at least one external interaction air region in the at least two light receivers. The at least two light receivers are configured to sample the scattered portions of the at least one light beam from a common volume of air in the at least one external interaction air region. The processing unit is operative to receive collected light data from the LiDAR unit and process the light data to produce air data parameters.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a block diagram of a LiDAR air data system, according to one embodiment;
Figure 2 is a block diagram of a LiDAR air data system, according to another embodiment; and
Figure 3 is a process flow diagram of a method of compensating for inter-channel effects as part of the data analysis for a LiDAR air data system, according to one implementation.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

A Light Detection and Ranging (LiDAR) air data system with multiply interrogated light transmitters is disclosed herein. The present system reconfigures the line of sight (LOS) such that there is a common, central transmit beam with two or more sets of receive optics configured to sample the backscatter caused by the transmit beam at the same location. Also, additional sets of receive optics can be added to sample different points along the central transmit beam.

The air data system generally includes an optical transceiver, and a processing unit such as a line replaceable unit (LRU) that is operatively coupled to the optical transceiver. The optical transceiver includes at least one light transmitter, such as a laser device, and at least two light receivers such as telescopes. The at least two light receivers are configured to sample scattered portions of the light beam emitted by the transmitter from a common volume of air in an external interaction air region.

In one embodiment, the air data system is operative to have LOS configurations that measure air data parameters in a single interaction air region outside a boundary layer of a vehicle such as an aircraft. In other embodiments, the air data system is operative to have LOS configurations that measure air data parameters in multiple interaction air regions outside a boundary layer of a vehicle such as an aircraft.

As indicated previously, state of the art LiDAR air data systems typically have LOS configurations that measure air data parameters in distinct interaction regions outside the boundary layer of the aircraft. The parameters measured at each of the interaction regions are averaged to produce the system air data outputs. If the air is inhomogeneous this can result in errors in the averaged air data parameters.

The present approach provides a system configuration where all the LOS sample the same volume of air to avoid the assumption of air homogeneity. This provides a system that is more robust to all flight conditions of an aircraft. As the present system is not susceptible to inhomogeneous air conditions, this gives a performance advantage over conventional systems.

Furthermore, the present approach will result in a lower cost system, as less optical components are required. For example, one set of transmit optics can be used as opposed to two or more, which reduces system cost and complexity. Additionally, the receive optics are configured to sample the same air volume along the transmit beam, which circumvents the inhomogeneous air problem.

Further details of various embodiments are described hereafter with reference to the drawings.

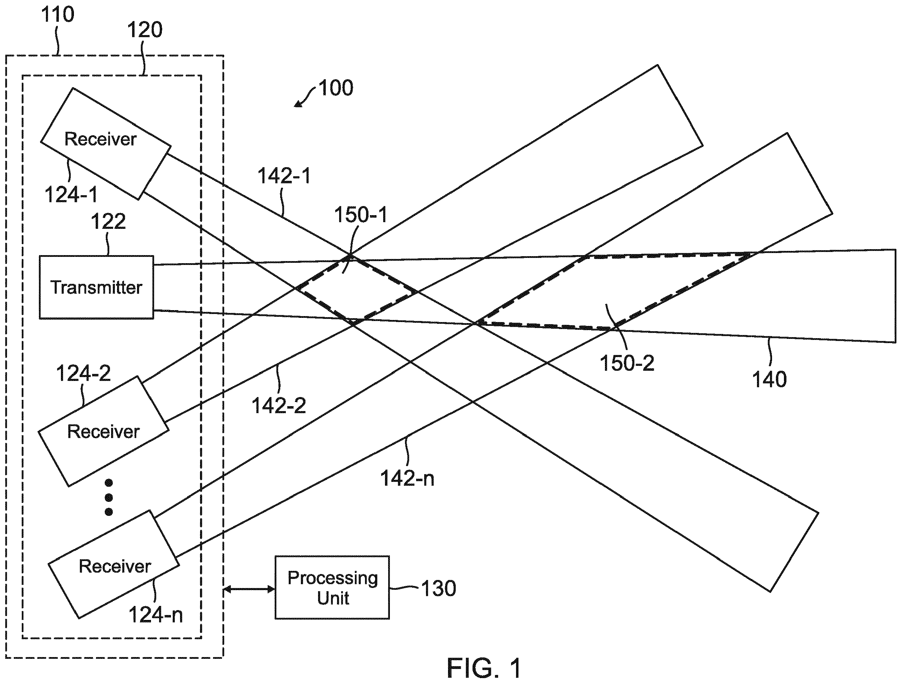

Figure 1 is a block diagram of a LiDAR air data system 100, according to one embodiment. The air data system 100 includes a LiDAR unit 110 comprising an optical transceiver 120. The optical transceiver 120 includes at least one light transmitter 122, such as a laser transmitter, and a plurality of light receivers 124-1, 124-2, ... 124-n. The receivers 124-1, 124-2, ... 124-n each include a set of collection optics for collecting scattered portions of transmitted light from transmitter 122.

As shown in Figure 1, transmitter 122 is configured to send a light beam 140 into a first external interaction air region 150-1, and a second external interaction air region 150-2, along a first line of sight. The receivers 124-1, 124-2 are each configured to focus on interaction air region 150-1, along different lines of sight from each other and from the first line of sight, to respectively collect scattered portions 142-1, 142-2 of transmitted light beam 140 from interaction air region 150-1. In addition, one or more receivers 124-n are configured to focus on interaction air region 150-2, along a different line of sight from the first line of sight, to collect one or more scattered portions 142-n of transmitted light beam 140 from interaction air region 150-2.

Alternatively, one or more additional light transmitters can be employed in LiDAR unit 110, with each additional light transmitter respectively associated with at least two additional light receivers.

A processing unit 130 is in operative communication with LiDAR unit 110. The processing unit 130 is operative to receive collected light data from LiDAR unit 110, and process the data to produce one or more air data parameters. Examples of air data parameters include, but are not limited to, true air speed vector, air temperature, air pressure, angle of attack, angle of sideslip, or the like.

During operation, air data system 100 remotely interrogates multiple volumes of free stream air using light transmitted by LiDAR unit 110. For example, transmitter 122 sends light beam 140 into first and second interaction air regions 150-1, 150-2. The receivers 124-1, 124-2 respectively collect the scattered portions 142-1, 142-2 of the light beam from interaction air region 150-1, and the one or more receivers 124-n collect the one or more scattered portions 142-n of transmitted light beam 140 from interaction air region 150-2. The processing unit 130 then receives the collected light data from LiDAR unit 110 and processes the data to produce air data parameters.

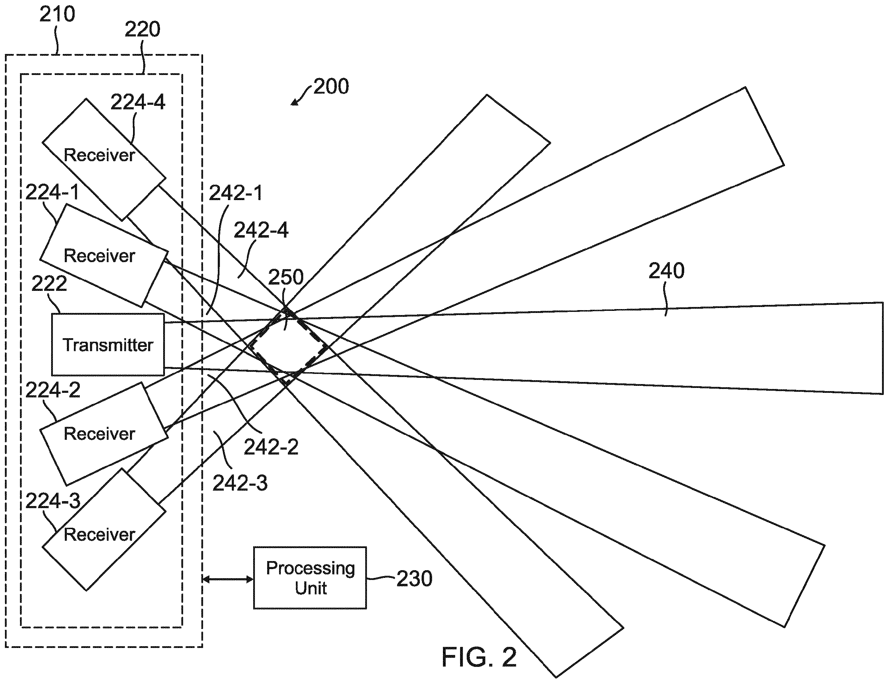

Figure 2 is a block diagram of a LiDAR air data system 200, according to another embodiment. The air data system 200 includes a LiDAR unit 210 comprising an optical transceiver 220. The optical transceiver 220 includes a light transmitter 222, such as a laser transmitter, and a set of light receivers 224-1, 224-2, 224-3, 224-4. The receivers each include a set of collection optics for collecting scattered portions of transmitted light from transmitter 222.

As shown in Figure 2, transmitter 222 is configured to send a light beam 240 into an external interaction air region 250 along a first line of sight. The receivers 224-1, 224-2, 224-3, 224-4 are each configured to focus on interaction air region 250, along different lines of sight from each other and from the first line of sight, to respectively collect scattered portions 242-1, 242-2, 242-3, 242-4 of transmitted light beam 240 from interaction air region 250.

A processing unit 230 is in operative communication with LiDAR unit 210. The processing unit 230 is operative to receive collected light data from LiDAR unit 210 and process the data to produce one or more air data parameters.

During operation, air data system 200 remotely interrogates a single volume of free stream air using light transmitted by LiDAR unit 210. For example, transmitter 222 sends light beam 240 into interaction air region 250. The receivers 224-1, 224-2, 224-3, 224-4 respectively collect the scattered portions 242-1, 242-2, 242-3, 242-4 of the light beam from interaction air region 250. The processing unit 230 then receives the collected light data from LiDAR unit 210 and processes the data to produce air data parameters, such as true air speed vector, air temperature, air pressure, angle of attack, angle of sideslip, or the like.

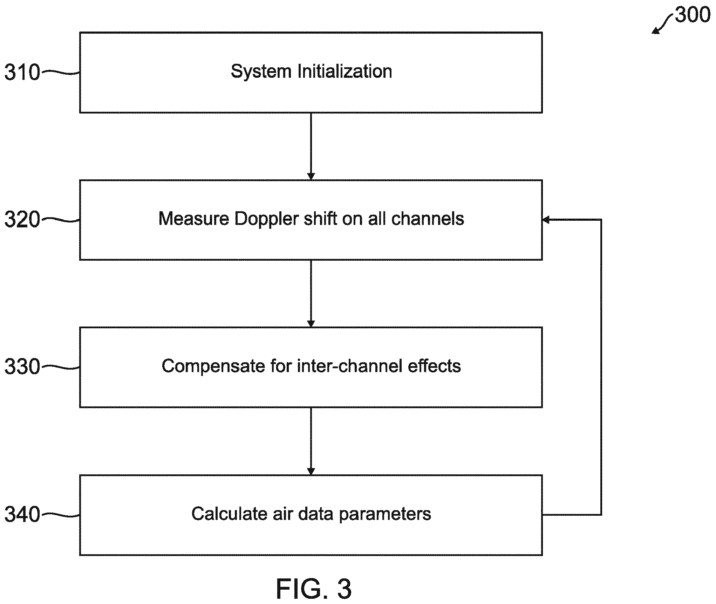

The processing units employed in the LiDAR air data systems can include executable program instructions for implementing a method of compensating for inter-channel effects as part of the data analysis. Figure 3 is a process flow diagram of a method 300 of compensating for inter-channel effects, according to one implementation.

The method 300 first performs a system initialization (block 310), after which a Doppler shift is respectively measured on all receiver channels in the LiDAR unit having respectively different lines of sight different from a line of sight of the light transmitter (block 320). The method 300 then compensates for inter-channel effects (block 330), based on the measured Doppler shifts for the receiver channels having the different lines of sight. Air data parameters are then calculated based on the received light data and compensation for inter-channel effects (block 340). The method 300 then repeats starting at block 320, to provide an adaptive feedback for maintaining compensation for inter-channel effects in the LiDAR air data system.

The compensation for inter-channel effects in method 300 accounts for the fact that each receiver is measuring the Doppler shift along its line of sight, not the transmitter's line of sight. Therefore, the multiple receivers respectively measure different Doppler shifts while looking at the same interrogation air volume of an interaction air region, based on the locations and pointing directions of the receivers.

### Example Embodiments

Example 1 includes an air data system, comprising: a light detection and ranging (LiDAR) unit comprising an optical transceiver that includes at least one light transmitter and at least two light receivers; and a processing unit in operative communication with the LiDAR unit; wherein the LiDAR unit is configured to transmit at least one light beam into at least one external interaction air region along a first line of sight, and collect scattered portions of the at least one light beam from the at least one external interaction air region in the at least two light receivers; wherein the at least two light receivers are configured to sample the scattered portions of the at least one light beam from a common volume of air in the at least one external interaction air region; wherein the processing unit is operative to receive collected light data from the LiDAR unit and process the light data to produce air data parameters.
Example 2 includes the air data system of Example 1, wherein the at least one light transmitter comprises at least one laser transmitter; and the at least two light receivers each include a respective set of light collection optics.
Example 3 includes the air data system of any of Examples 1-2, wherein the LiDAR unit includes one or more additional light receivers.
Example 4 includes the air data system of any of Examples 1-3, wherein the LiDAR unit includes a single light transmitter and four light receivers.
Example 5 includes the air data system of any of Examples 1-4, wherein the LiDAR unit includes one or more additional light transmitters.
Example 6 includes the air data system of Example 5, wherein the one or more additional light transmitters are respectively associated with at least two additional light receivers.
Example 7 includes the air data system of any of Examples 1-6, wherein the at least two light receivers sample the scattered portions of the at least one light beam from the common volume of air along respectively different lines of sight that are also different from the first line of sight.
Example 8 includes the air data system of any of Examples 1-7, wherein the processing unit is operative to: (a) measure a respective Doppler shift for all receiver channels in the LiDAR unit having respectively different lines of sight that are also different from the first line of sight; (b) compensate for inter-channel effects based on the measured respective Doppler shifts for the receiver channels having the different lines of sight; (c) calculate the air data parameters based on the light data and the compensation for inter-channel effects; and (d) repeat the previous steps starting at step (a) to provide an adaptive feedback for maintaining the compensation for inter-channel effects.
Example 9 includes the air data system of any of Examples 1-8, wherein the LiDAR unit and the processing unit are located on a vehicle.
Example 10 includes the air data system of Example 9, wherein the vehicle is an aircraft.
Example 11 includes the air data system of any of Examples 1-10, wherein the processing unit comprises a line replaceable unit (LRU) that is operatively coupled to the optical transceiver.
Example 12 includes the air data system of any of Examples 1-11, wherein the light receivers each comprise a telescope.
Example 13 includes an air data method, comprising: providing a LiDAR unit comprising an optical transceiver that includes at least one light transmitter and at least two light receivers; transmitting at least one light beam from the LiDAR unit into at least one external interaction air region along a first line of sight; collecting scattered portions of the at least one light beam from the at least one external interaction air region in the LiDAR unit; sampling, in the at least two light receivers, the collected scattered portions of the at least one light beam from a common volume of air in the at least one external interaction air region; sending collected light data from the LiDAR unit to a processing unit; and computing air data parameters in the processing unit based on the collected light data.
Example 14 includes the air data method of Example 13, wherein the at least one light transmitter comprises at least one laser transmitter; and the at least two light receivers each include a respective set of light collection optics.
Example 15 includes the air data method of any of Examples 13-14, wherein the LiDAR unit includes one or more additional light receivers.
Example 16 includes the air data method of any of Examples 13-15, wherein the LiDAR unit includes a single light transmitter and four light receivers.
Example 17 includes the air data method of any of Examples 13-16, wherein the LiDAR unit includes one or more additional light transmitters.
Example 18 includes the air data method of any of Examples 13-17, wherein the one or more additional light transmitters are respectively associated with at least two additional light receivers.
Example 19 includes the air data method of any of Examples 13-18, wherein the processing unit is operative perform a method comprising: (a) measuring a respective Doppler shift for all receiver channels in the LiDAR unit having respectively different lines of sight that are also different from the first line of sight; (b) compensating for inter-channel effects based on the measured respective Doppler shifts for the receiver channels having the different lines of sight; (c) calculating the air data parameters based on the light data and the compensation for inter-channel effects; and (d) repeating the previous steps starting at step (a) to provide an adaptive feedback for maintaining the compensation for inter-channel effects.
Example 20 includes the air data method of any of Examples 13-19, wherein the LiDAR unit and the processing unit are located on a vehicle.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. An air data system, comprising:
a light detection and ranging (LiDAR) unit comprising an optical transceiver that includes at least one light transmitter and at least two light receivers; and
a processing unit in operative communication with the LiDAR unit;
wherein the LiDAR unit is configured to transmit at least one light beam into at least one external interaction air region along a first line of sight, and collect scattered portions of the at least one light beam from the at least one external interaction air region in the at least two light receivers; wherein the at least two light receivers are configured to sample the scattered portions of the at least one light beam from a common volume of air in the at least one external interaction air region;
wherein the processing unit is operative to receive collected light data from the LiDAR unit and process the light data to produce air data parameters.

2. The air data system of claim 1, wherein the LiDAR unit includes one or more additional light receivers.

3. The air data system of claim 1, wherein the LiDAR unit includes a single light transmitter and four light receivers.

4. The air data system of claim 1, wherein the LiDAR unit includes one or more additional light transmitters.

5. The air data system of claim 4, wherein the one or more additional light transmitters are respectively associated with at least two additional light receivers.

6. The air data system of claim 1, wherein the at least two light receivers sample the scattered portions of the at least one light beam from the common volume of air along respectively different lines of sight that are also different from the first line of sight.

7. The air data system of claim 1, wherein the processing unit is operative to:
(a) measure a respective Doppler shift for all receiver channels in the LiDAR unit having respectively different lines of sight that are also different from the first line of sight;
(b) compensate for inter-channel effects based on the measured respective Doppler shifts for the receiver channels having the different lines of sight;
(c) calculate the air data parameters based on the light data and the compensation for inter-channel effects; and
(d) repeat the previous steps starting at step (a) to provide an adaptive feedback for maintaining the compensation for inter-channel effects.

8. The air data system of claim 1, wherein the LiDAR unit and the processing unit are located on a vehicle.

9. The air data system of claim 8, wherein the vehicle is an aircraft.

10. An air data method, comprising:
providing a light detection and ranging (LiDAR) unit comprising an optical transceiver that includes at least one light transmitter and at least two light receivers;
transmitting at least one light beam from the LiDAR unit into at least one external interaction air region along a first line of sight;
collecting scattered portions of the at least one light beam from the at least one external interaction air region in the LiDAR unit;
sampling, in the at least two light receivers, the collected scattered portions of the at least one light beam from a common volume of air in the at least one external interaction air region;
sending collected light data from the LiDAR unit to a processing unit; and computing air data parameters in the processing unit based on the collected light data.
